# EUROPEAN PATENT APPLICATION

(11) **EP 4 574 529 A1**
(43) Date of publication of application: **25.06.2025**
(21) Application number: 24219017.1
(22) Date of filing: 11.12.2024
(51) Int. Cl.: B60L 7/22

(54) **ROAD VEHICLE PROVIDED WITH AN ENERGY DISSIPATOR DEVICE**

(30) Priority: 13.12.2023 IT 202300026589
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

Road vehicle (1) comprising: a frame (2) provided with a plurality of metal elements (9) interconnected with one another; at least one drive wheel (4); at least one electric motor (5) connected to the drive wheel (4); an electronic power converter (7), which controls the electric motor (5); and a dissipator device (15) that is connected to the electronic power converter (7), is configured to dissipate electrical energy and comprises an expendable body (16) that undergoes an endothermic transformation when an electric current flows through it.

## Description

### CROSS-REFERENCE TO RELATED APPLICATIONS

This patent application claims priority from Italian patent application no. 102023000026589 filed on December 13, 2023, the entire disclosure of which is incorporated herein by reference.

### TECHNICAL FIELD

The present invention relates to a road vehicle.

### PRIOR ART

Traditionally, a road vehicle is provided with mechanical brakes (disc brakes or, less frequently, drum brakes) that dissipate the kinetic energy that the road vehicle has by transforming the same into heat.

In an electric road vehicle, the road vehicle has always been braked by using so-called regenerative braking, which is achieved by using the electric machine connected to the drive wheels as a generator so that it absorbs mechanical energy (namely, the kinetic energy the road vehicle has) to generate electrical energy that is stored in the storage system of the road vehicle.

Recently, to reduce costs, weight, and size, it has been proposed to eliminate the mechanical braking system that acts on the rear wheels in a rear-wheel drive electric vehicle so that only the braking torque generated by the electric machine acts on the rear wheels when necessary. However, for safety (namely, to ensure that electric braking is always available in case of emergency), this solution requires the presence of a dissipator device that is able to dissipate the impulsive electrical energy (namely, high power and short duration) that is produced during an emergency braking and that cannot be absorbed by the storage system of the road vehicle (for example because the storage system is fully charged).

Typically, a dissipator device comprises an electrical resistor that converts electrical energy into heat by the Joule effect and is air-cooled; however, this type of dissipator device is particularly bulky and requires a constant flow of air to dissipate the heat (namely, the dissipator device must be in communication with an air intake obtained through the body of the road vehicle).

Patent application DE102010005022A1 describes a road vehicle in which the dissipator device comprises an electrical resistor that converts electrical energy into heat by the Joule effect and transmits said heat, through conduction, to a latent heat accumulator.

Patent application JP2010259238A describes a road vehicle in which the dissipator device comprises a thermoelectric converter that converts electrical energy into heat that is transmitted, through conduction, to a heat accumulator.

Patent application DE102022201244A1 describes a motorcycle in which the dissipator device comprises an electrical resistor that converts electrical energy into heat by the Joule effect and transmits said heat, through conduction, to a component of the frame.

### DESCRIPTION OF THE INVENTION

The object of the present invention is to provide a road vehicle provided with an energy dissipator device that is free from the drawbacks described above and, at the same time, is simple and inexpensive to produce.

According to the present invention, a road vehicle is provided, which is provided with an energy dissipator device, as claimed in the attached claims.

The claims describe preferred embodiments of the present invention and form an integral part of the present description.

### BRIEF DESCRIPTION OF THE DRAWINGS

The present invention will now be described with reference to the attached drawings, which illustrate a non-limiting example of embodiment thereof, wherein:
- Figure 1 is a plan and schematic view of a road vehicle made according to the present invention and provided with at least one energy dissipator device;
- Figure 2 is a schematic and perspective view of a frame of the road vehicle of Figure 1;
- Figure 3 is a schematic view of a dissipator device of Figure 1; and
- Figure 4 is a schematic view of a further dissipator device of Figure 1.

### PREFERRED EMBODIMENTS OF THE INVENTION

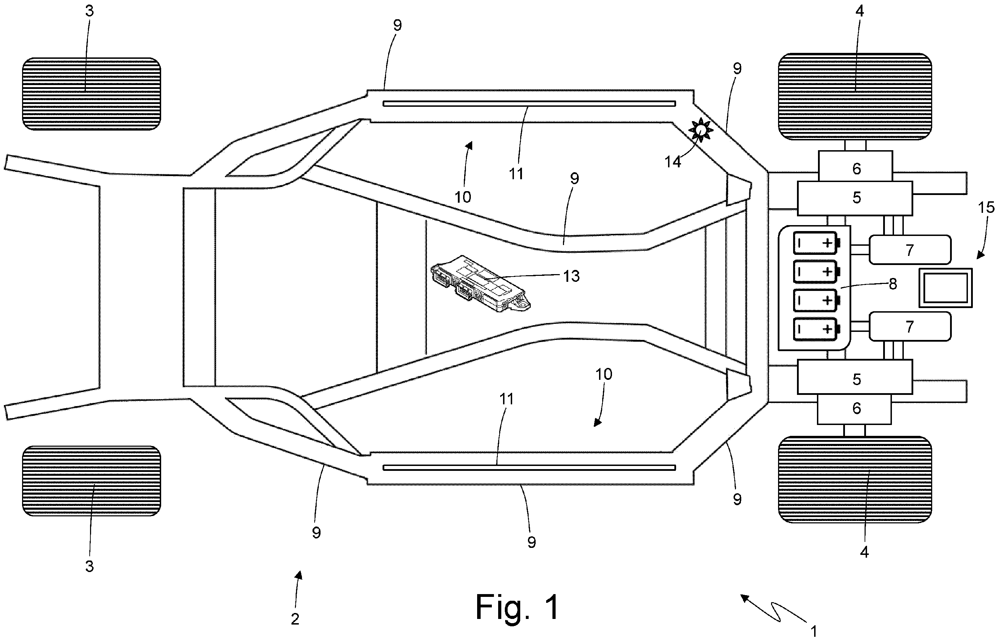

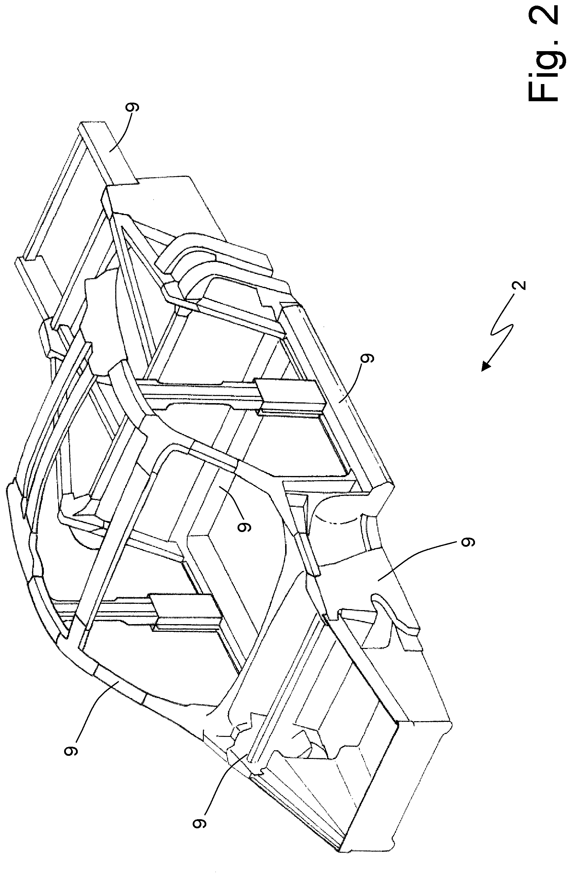

In Figure 1, number 1 denotes as a whole a road vehicle (in particular an automobile) comprising a frame 2 (also illustrated schematically in Figure 2), which supports a pair of front wheels 3 and a pair of rear drive wheels 4.

As illustrated in Figure 1, the automobile 1 has an electric traction (propulsion) and comprises two electric motors 5, each connected to a corresponding rear drive wheel 3 by means of a mechanical transmission 6 (for example comprising an epicyclic gear train). Each electric motor 5 is driven by a corresponding electronic power converter 7 which supplies an alternating electric voltage to the corresponding stator winding and exchanges electrical energy with a storage device 8.

As illustrated in Figures 1 and 2, the frame 2 comprises a set of boxed metal elements 9 (that is, hollow and therefore internally empty) interconnected; said metal elements 9 are for example formed by internally hollow linear bars which are made of a light metal alloy (generally aluminium-based), are made by extrusion, and are joined together by welding at structural nodes preferably defined by joint bodies.

As illustrated in Figure 1, the road vehicle 1 comprises a dissipator device 10 that is connected to the electronic power converters 7 and is configured to dissipate (absorb) electrical energy; that is, the dissipator device 10 is able to absorb a high electrical power (of the order of hundreds of kW) for a short time (of the order of a few seconds).

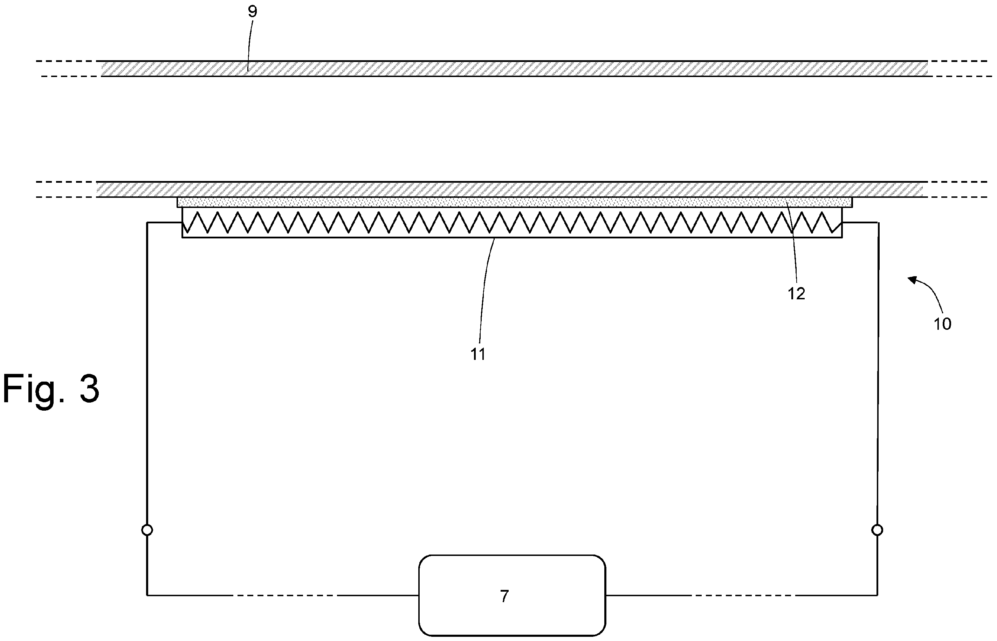

As better illustrated in Figure 3, the dissipator device 10 comprises at least one electrical resistor 11 that is configured to be passed-through by an electric current generating heat by the Joule effect and is thermally coupled to at least one corresponding metal element 9 of the frame 2 to transmit heat, through conduction, to the corresponding metal element 9; said heat is transmitted, through thermal conduction, to the metal element 9 of the frame 2 which also transfers the same, through thermal conduction, to the entire frame 2. That is, the electrical resistor 11 is configured to generate heat by the Joule effect when an electric current flows through it and to transmit the heat to the corresponding metal element 9 of the frame 2.

The electrical resistor 11 can be arranged outside the corresponding metal element 9 of the frame 2 and therefore be fixed to an external surface of the corresponding metal element 9 of the frame 2; alternatively, the electrical resistor 11 can be arranged inside the corresponding metal element 9 of the frame 2 and therefore be fixed to an internal surface of the corresponding metal element 9 (in this embodiment, the presence of the electrical resistor 11 does not increase the external overall dimensions bulk of the frame 2 but the insertion of the electrical resistor 11 inside the corresponding metal element 9 of the frame 2 is much more complex).

Generally, the dissipator device 10 comprises a plurality of electrical resistors 11 that are connected to one another in series and/or in parallel and are thermally coupled to corresponding metal elements 9 of the frame 2. Preferably, the electrical resistors 11 are at least partially connected to one another in parallel so that the interruption (breakage) of an electrical resistor 11 does not completely compromise the functionality of the dissipator device 10; for this purpose, the dissipator device 10 can be oversized to maintain its functionality even in the event of interruption (breakage) of an electrical resistor 11.

According to a preferred embodiment, each electrical resistor 11 is directly fixed to a corresponding metal element 9 of the frame 2 by means of a heat-conducting fixing element 12, for example a heat-conducting resin or another type of heat-conducting adhesive.

As illustrated in Figure 1, the road vehicle 1 comprises a control unit 13 that supervises the operation of the electric motors 5 (namely, it controls the electronic power converters 7); when the driver requests to brake the road vehicle 1 by operating the brake control, the control unit 13 always tries to perform regenerative braking that is achieved by using the electric motors 5 connected to the rear drive wheels 4 as generators so that they absorb mechanical energy (namely, the kinetic energy the road vehicle 1 has) to generate electrical energy that is normally stored in the storage device 8.

In order to reduce cost, weight and size, the road vehicle 1 does not have a mechanical braking system that acts on the rear drive wheels 4 so that only the braking torque generated by the electric motors 5 acts on the rear drive wheels 4. This solution requires the presence of the dissipator device 10 that is able to dissipate the impulsive electrical energy (namely, of high power and short duration) that is produced during an emergency braking and that cannot be absorbed by the storage device 8 (for example because the storage device 8 is fully charged).

According to a preferred embodiment, at least one temperature sensor 14 is provided that is configured to measure a temperature of a metal element 9 of the frame 2. The control unit 13 is configured to receive and store temperature measurements performed by the temperature sensor 14 so as to always be able to reconstruct the thermal stresses to which the frame 2 has been subjected due to the heat generated by the dissipator device 10. In particular, the control unit 13 is configured to generate a signal if the temperature measured by the temperature sensor 14 exceeds a warning threshold value.

Furthermore, as illustrated in Figure 1, the road vehicle 1 comprises an additional dissipator device 15 which is different and separate from the dissipator device 10 although performing the same function. The dissipator device 15 may be an alternative to the dissipator device 10 or may be used alongside (for example as an emergency reserve) the dissipator device 10.

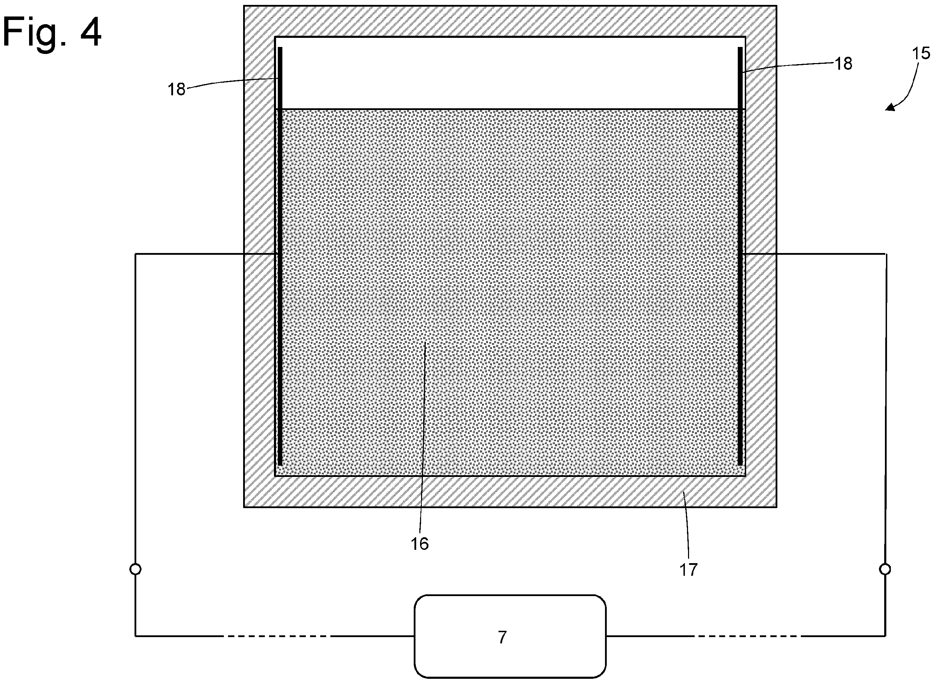

As illustrated in Figure 4, the dissipator device 15 comprises a expendable body 16 which undergoes an endothermic transformation when it is internally passed-through by an electric current (very high and typical of emergency braking at the maximum possible braking power) that directly flows through the expendable body 16; in thermodynamics, an endothermic process is defined as a transformation which involves an increase in the enthalpy of the system and thus a transfer of heat from the environment to the system and therefore the endothermic transformation of the expendable body 16 requires a heat supply from the environment, thus absorbing heat.

The dissipator device 15 comprises an electric circuit (illustrated in Figure 4) configured to pass an electric current directly through the expendable body 16 so that the electric current flows from one end of the expendable body 16 to the other; that is, the expendable body 16 is directly part of the electric circuit and is passed-through from side to side by the electric current flowing along the electric circuit.

According to a preferred embodiment, the expendable body 16 undergoes a reversible endothermic transformation when it is internally passed-through by an electric current (very high and typical of emergency braking at the maximum possible braking power) that directly flows through the expendable body 1). Preferably, the expendable body 16 undergoes a change of state when it is internally passed-through by an electric current (very high) that directly flows through the expendable body 16; typically, the expendable body 16 is in the solid state at room temperature and changes to the liquid state when it is internally passed-through by an electric current (very high) due to the heat generated by the passage of the electric current (very high). For example, the expendable body 16 is a salt that is at least partially melted when it is internally passed-through by an electric current (very high) that directly flows through the expendable body 16. For example, common table salt melts at a temperature of about 800°C and therefore even a modest amount (a few kg) of salt is sufficient to be able to absorb a large amount of energy following the melting thereof.

The dissipator device 10 comprises a thermally insulated container 17 which houses, on the inside, the expendable body 16 (typically the salt) and at least a pair of electrodes 18 that are immersed in the salt and are connected to the electronic power converter 7. Obviously, both the thermal insulation of the container 17 and the electrodes 18 should be able to withstand without (excessive) damage the temperature that the expendable body 16 (typically the salt) can reach during and after the melting thereof.

The container 17 comprises a maximum pressure valve that opens (typically towards the road surface and therefore on the opposite side of the passenger compartment) if the internal pressure exceeds a threshold value and avoids the risk of explosion of the container 17.

The external wall of the container 17 is normally metallic (for example made of steel that melts at around 1,500°C) and is thermally coupled to at least one corresponding metal element 9 of the frame 2 to transmit heat, through conduction, to the corresponding metal element 9; in this way, the heat that has been generated inside the container 17 can be slowly dissipated in the frame 2 (which acts as a radiator).

According to an alternative embodiment, the expendable body 16 undergoes an irreversible and destructive endothermic transformation when it is internally passed-through by an electric current (very high and typical of emergency braking at the maximum possible braking power) that directly flows through the expendable body 1); for example, the expendable body 16 could be a piece of wood-based material that is carbonized by the passage of a (very high) electric current.

As previously mentioned, the dissipator device 15 comprises an electric circuit (illustrated in Figure 4) configured to allow an electric current pass directly through the expendable body 16 so that the electric current flows from one end of the expendable body 16 to the other; the electric circuit comprises two electrodes 18 that are in electrical contact with two opposite ends of the expendable body 16 so that the electric current enters the expendable body 16 at one electrode 18 and exits the expendable body 16 at the other electrode 18 (namely, the opposite electrode 18).

Generally, the dissipator device 10 or 15 can be used exclusively in an emergency (that is, when it is necessary to brake the road vehicle 1 violently and in an unexpected and unpredictable manner and the storage device 8 is not able to absorb all the electrical energy produced by braking). However, the dissipator device 15 could also be used during track driving to maximize performance, accepting that at the end of the use on the track the expendable body 16 of the dissipator device 15 must be replaced (in any case presenting a modest replacement cost). In other words, for use on the track a specific expendable body 16 could be provided, suitable for use on the track and to be replaced after a few laps (just as qualifying tires are replaced after a few laps).

In the embodiment illustrated in the attached figures, the road vehicle 1 is a car provided with two rear drive wheels 4; according to a different embodiment not illustrated, the road vehicle 1 is a motorcycle provided with a single rear drive wheel.

The embodiments described herein may be combined with one another without departing from the scope of protection of the present invention.

The above-described road vehicle 1 has numerous advantages.

Firstly, the above-described road vehicle 1 allows for the safe dispensing with of the (traditional) mechanical braking system that acts on the rear drive wheels 4, thus allowing for a significant saving in weight and size (among other things, the brake disc is a rotating, unsuspended mass and the brake caliper is an unsuspended mass and therefore their absence allows for a significant improvement in the dynamics of the road vehicle 1). This result is achieved thanks to the presence of the dissipator device 10 or 16 which allows for an emergency electric braking to always be performed on the rear drive wheels 4 even when the impulsive electric energy (namely, of high power and short duration) that is produced during an emergency braking cannot be absorbed by the storage device 8 (for example because the storage device 8 is fully charged).

Furthermore, the dissipator device 10 or 16 is compact and low cost: the dissipator device 10 only requires the use of relatively small electrical resistors 11 since it uses the entire frame 2 of the road vehicle 1 as a radiator and the dissipator device 16 requires a small mass (a few kg) of an expendable body 16 that is easily available and low cost.

### LIST OF REFERENCE NUMBERS OF THE FIGURES

1 road vehicle
2 frame
3 front wheels
4 rear wheels
5 electric motors
6 mechanical transmission
7 electronic power converter
8 storage device
9 metal elements
10 dissipator device
11 electrical resistor
12 fixing element
13 control unit
14 temperature sensor
15 dissipator device
16 expendable body
17 container
18 electrodes

## Claims

1. A road vehicle (1) comprising:
at least one drive wheel (4);
at least one electric motor (5) connected to the drive wheel (4) ;
an electronic power converter (7), which controls the electric motor (5); and
a dissipator device (15), which is connected to the electronic power converter (7) and is configured to dissipate electrical energy;
the road vehicle (1) is **characterized in that** the dissipator device (15) comprises:
an expendable body (16), which undergoes an endothermic transformation when it is internally passed-through by an electric current that directly flows through the expendable body (16); and
an electric circuit configured to make an electric current pass directly through the expendable body (16) so that the electric current flows from one side of the expendable body (16) to the other.

2. The road vehicle (1) according to claim 1, wherein the expendable body (16) undergoes the endothermic transformation due to the heat generated when it is internally passed-through by an electric current that directly flows through the expendable body (16).

3. The road vehicle (1) according to claim 1 or 2, wherein the expendable body (16) undergoes a reversible endothermic transformation when it is internally passed-through by an electric current that directly flows through the expendable body (16) .

4. The road vehicle (1) according to claim 3, wherein the expendable body (16) undergoes a change of state when it is internally passed-through by an electric current that directly flows through the expendable body (16).

5. The road vehicle (1) according to claim 4, wherein the expendable body (16) is a salt, which is at least partially melted when it is internally passed-through by an electric current that directly flows through the expendable body (16).

6. The road vehicle (1) according to claim 4 or 5, wherein the dissipator device (15) comprises:
a thermally insulated container (17), which houses, on the inside, the expendable body (16); and
at least a pair of electrodes (18), which are immersed in the expendable body (16) and are connected to the electronic power converter (7).

7. The road vehicle (1) according to claim 6, wherein:
a frame (2) is provided, which comprises a plurality of metal elements (9) interconnected with one another; and
the container (17) is thermally coupled to at least one corresponding metal element (9) of the frame (2) to transmit heat, through conduction, to the corresponding metal element (9) .

8. The road vehicle (1) according to claim 1 or 2, wherein the expendable body (16) undergoes an irreversible and destructive endothermic transformation when it is internally passed-through by an electric current that directly flows through the expendable body (16).

9. The road vehicle (1) according to claim 8, wherein the expendable body (16) is wood-based and is carbonized by the passage of an electric current that directly flows through the expendable body (16).

10. The road vehicle (1) according to one of the claims from 1 to 9, wherein the expendable body (16) is directly part of the electric circuit and is passed-through from side to side by the electric current flowing along the electric circuit.

11. The road vehicle (1) according to one of the claims from 1 to 10, wherein the electric circuit comprises two electrodes (18) which are in electric contact with two opposite ends of the expendable body (16) so that the electric current enters the expendable body (16) from one electrode (18) and exits the expendable body (16) from the other electrode (18).

12. The road vehicle (1) according to one of the claims from 1 to 11, wherein the drive wheel (4) is not coupled to any mechanical brake and the braking of the drive wheel (4) is carried out by only having the electric motor (5) operate as a generator.
